Europäisches Patentamt

European Patent Office

Office européen des brevets

(19)

(11) Veröffentlichungsnummer: **0 000 187**
**B1**

(12) **EUROPÄISCHE PATENTSCHRIFT**

(21) Anmeldenummer: **78100225.8**

(22) Anmeldetag: **23.06.78**

(51) Int. Cl.³: **F 15 D 1/02, F 16 L 55/02, G 10 K 11/00**

(54) Verfahren zur Geräuschminderung bei der Drosselung von Dampf- und Gasströmen

(30) Priorität: **25.06.77 (DE) 2728778**

(43) Veröffentlichungstag der Anmeldung:
**10.01.79 Patentblatt 79/01**

(45) Bekanntmachung des Hinweises auf die Patenterteilung:
**17.09.80 Patentblatt 80/19**

(84) Benannte Vertragsstaaten:
**CH DE FR GB**

(56) Entgegenhaltungen:
**DE - A - 2 263 956**
**Chemical Engineering, Vol. 78, No. 11, 17.5.71,**
**US Mc Graw-Hill New York H. D. Baumann,**
**"Control Valve", Seiten 120—126**

(73) Patentinhaber: **BAYER AG**
**Zentralbereich Patente, Marken und Lizenzen**
**D - 5090 Leverkusen 1, Bayerwerk (DE)**
**EC ERDÖLCHEMIE GMBH**
**Postfach 75 2002**
**D - 5000 Köln 71 (DE)**
**GULDE REGELARMATUREN KG**
**Postfach 63**
**D - 6700 Ludwigshafen (DE)**

(72) Erfinder: **Kolb, Fritz**
**Pankratiusstrasse 8**
**D - 5074 Odenthal (DE)**
**Ziegert, Otto, Dr.**
**Amselweg 26**
**D - 4047 Dormagen (DE)**
**Fehlisch, Silvan**
**Siegstrasse 69 D - 4047 Dormagen (DE)**
**Bender, Hans**
**Rosenstrasse 43**
**D - 6800 Mannheim 71 (DE)**
**Schmitt, Manfred**
**Von-Heyl-Strasse 19**
**D - 6712 Bobenheim-Roxheim 1 (DE)**

(74) Vertreter: **Dill, Erwin, Dr.**
**c/o BAYER AG Zentralbereich Patente Marken und**
**Lizenzen Bayerwerk**
**D - 5090 Leverkusen 1 (DE)**

**GUIDE REGELARMATUREN KG**

Verfahren zur Geräuschminderung bei der Drosselung von Dampf- und Gasströmen

Die Erfindung betrifft ein Verfahren zur Geräuschminderung bei der Drosselung von Dampf- und Gasströmen, bei dem auf einem kurzen Strömungsabschnitt die aufgeteilte Ströme überkritisch entspannt werden.

Das Entspannen von Gasen oder Dämpfen ist für die Regelung in verfahrenstechnischen Anlagen notwendig. Besonders bei chemischen Prozessen kommt ein solcher Verfahrensschritt oft vor. Dabei entstehen ungewollt Geräusche, die zu Belästigungen am Arbeitsplatz führen und die Umwelt stören.

Bekannt ist die Aufspaltung eines Stromes in Teilströme, die einzeln einstufig bis zum gewünschten Druck entspannt werden.

Mit diesem Verfahren können Schallpegelminderungen bis zu 15 dB(A) erreicht werden, die im allgemeinen nicht ausreichen. Der Grund für die geringe Schallpegelminderung ist durch die geometrischen Abmessungen gegeben. Einerseits können die Bohrungen für die Teilströme nicht beliebig klein gemacht werden, da dann die Betriebssicherheit durch Verschmutzungen gefährdet ist. Andererseits werden die Baugrößen bei grosen Mengen unhandlich. Weiter hat sich herausgestellt, daß ein einstufiger Druckabbau keineswegs zu optimalen Schallpegelminderungen führt.

Weiter können Drosselungen durch in Reihe geschaltete Stufenwiderstände verwirklicht werden.

Die Effectivität der Schallpegelminderung richtet sich entscheidend nach dem Stufendruckgefälle, welches durch die Konstruktion der Stufenwiderstände vorgegeben wird. Eine Anpassung an bestimmte Betriebsverhältnisse ist deshalb nachträglich kaum möglich. Auch Fertigungsfehler wirken sich ungünstig aus. Weiter sind solche Konstruktionen oft sehr aufwendig, so daß sie neben hohen Investitionskosten auch viel Wartung erfordern.

Es ist ein Verfahren zu finden, welches die geräuscharme Entspannung von Gasen und Dämpfen mit einfachen, wartungsfreundlichen und betriebssicheren Maßnahmen erlaubt, die ohne Schwierigkeiten an die erforderlichen verfahrens- und schalltechnischen Bedingungen angepaßt werden können.

Diese Aufgabe wird erfindungsgemäß dadurch gelöst, daß nach deren Entspannen in dem ersten Strömungsabschnitt die Ströme dann in einem unmittelbar anschließenden zweiten Strömungsabschnitt vielfach aufgeteilt und verlangsamt werden, wobei die Strömungsquerschnitte in dem zweiten Strömungsabschnitt einzeln kleiner sind als in dem ersten Strömungsabschnitt aber in ihrer Gesamtheit wesentlich größer sind als die Gesamtheit der Strömungsquerschnitte in dem ersten Strömungsabschnitt.

Für den Fachmann war es überraschend, daß mit diesem Verfahren eine Pegelsenkung von 30 dB(A) möglich ist. Das kommt dadurch zustande, daß in der ersten Strecke nach Aufteilung in Teilströme die potentielle Energie der Strömung entsprechend dem Druckverhältnis in kinetische Energie umgewandelt wird und daß in der zweiten Strecke die kinetische Energie durch Reibung in Wärme überführt wird. Wesentlich ist dabei, daß in der zweiten Strecke durch die relativ engen Abströmräume die Energieumwandlung intensiviert und schallarm wird. Außerdem bewirken die engen Abströmungsquerschnitte eine Frequenzerhöhung des Maximums des abgestrahlten Schallspektrums. Die zweite Strecke soll nicht dazu dienen, potentielle Energie abzubauen. Weiter ergibt dieses Verfahren eine gute Regelcharakteristik.

Nach einer besonderen Durchführung des Verfahrens wird der Strömungsquerschnitt in der zweiten Strecke um das 1,5—15 fache Produkt aus dem Quotienten Eingangsdruck zu Enddruck mal dem Strömungsquerschnitt der ersten Strecke erweitert.

Durch diese Erweiterung des Querschnittes werden die Freistrahlen so abgeführt, daß eine Vereinigung der Freistrahlen und damit eine zusätzliche Schallentstehung vermieden wird.

In einer weiteren Durchführung des Verfahrens sind die charakteristischen Abstände der Begrenzungswände der Flußquerschnitte in der zweiten Strecke kleiner als die mittlere Wellenlänge des abgestrahlten Schallspektrums. Durch die Einhaltung dieser Bedingung-Wellenlänge zu charakteristischen Abstand, der u.a. auch in der Strouhal-Zahl enthalten ist — wird erreicht, daß die damit erzielten Impedanzsprünge zu einer Schalldämmung führen.

Bei einer weiteren Durchführung des Verfahrens wird in der ersten Strecke die Entspannung in mehrere Stufen aufgeteilt, was sich besonders bei extrem hohem Druckgefälle als vorteilhaft erwiesen hat.

**Patentansprüche**

1. Verfahren zur Geräuschminderung bei der Drosselung von Dampf- und Gasströnen, bei dem auf einem kurzen Strömungsabschnitt die aufgeteilten Ströme überkritisch entspannt werden, dadurch gekennzeichnet, daß die Ströme dann in einem unmittelbar anschließenden zweiten Strömungsabschnitt vielfach aufgeteilt und verlangsamt werden, wobei die Strömungsquerschnitte in dem zweiten Strömungsabschnitt einzeln kleiner sind als in dem ersten Strömungsabschnitt, aber in ihrer Gesamtheit wesentlich großer sind als die Gesamtheit der Strömungsquerschnitte in dem ersten Strömungsabschnitt.

2. Verfahren nach Anspruch 1, dadurch gekennzeichnet, daß der gesamte Strömungsquerschnitt in dem zweiten Strömungsabschnitt um das 1,5—15-fache Produkt aus dem Quotienten Eingangsdruck zu Enddruck mal dem gesamten Strömungsquerschnitt des ersten Strömungsabschnittes erweitert wird.

3. Verfahren nach Anspruch 1 bis 2, dadurch gekennzeichnet, daß die charakteristischen Abstände der Begrenzungen der Strömungsquerschnitte in der zweiten Strecke kleiner als die mittlere Wellenlänge des abgestrahlten Schallspektrums sind.

4. Verfahren nach Anspruch 1 bis 3, dadurch gekennzeichnet, daß die Entspannung in dem ersten Strömungsabschnitt mehrstufig ist.

## Revendications

1. Procédé pour la réduction du bruit produit par l'étranglement de flux de vapeur ou gaz, pendant lequel les flux divisés subissent une détente surcritique dans un court tronçon d'écoulement, ledit procédé étant caractérisé en ce que les flux sont ensuite subdivisés et ralentis dans un second tronçon d'écoulement adjacent les sections d'écoulement dans le second tronçon étant individuellement plus faibles que celles dans le premier tronçon, mais leur somme étant trés supérieure à celle des sections d'écoulement dans le premier tronçon.

2. Procédé selon revendication 1, caractérisé en ce que la section totale d'écoulement dans le second tronçon est égale à 1,5—15 fois le produit du rapport des pressions d'entrée et finale par la section totale d'écoulement dans le premier tronçon.

3. Procédé selon revendications 1 et 2, caractérisé en ce que les distances caractéristiques des limitations des sections d'écoulement dans le second tronçon sont inférieures à la longueur d'onde moyenne du spectre sonore émis.

4. Procédé selon revendications 1 à 3, caractérisé par une détente étagée dans le premier tronçon d'écoulement.

## Claims

1. Process for reducing noise during the throttling of streams of vapour or gas, in which the divided streams are let down in the supercritical state in a short section of flow, characterised in that, in a second section of flow immediately downstream of the first, the streams are then divided into several streams and slowed down, the flow cross-sections in the second section of flow individually being smaller than in the first section of flow, but their total being substantially greater than the total of the flow cross-sections in the first section of flow.

2. Process according to Claim 1, characterised in that the total flow cross-section in the second section of flow is increased by 1.5—15 times the product of the quotient of initial pressure to final pressure and the total flow cross-section of the first section of flow.

3. Process according to Claims 1 to 2, characterised in that the characteristic distances between the limiting walls of the flow cross-sections in the second zone are smaller than the average wavelength of the sound spectrum radiated.

4. Process according to Claims 1 to 3, characterised in that the letting-down in the first section of flow is a multi-stage operation.